(19) Europäisches Patentamt
European Patent Office
Office européen des brevets

(11) **EP 1 920 873 B1**

(12) **EUROPÄISCHE PATENTSCHRIFT**

(45) Veröffentlichungstag und Bekanntmachung des Hinweises auf die Patenterteilung:
**23.12.2015 Patentblatt 2015/52**

(51) Int Cl.:
***B23K 26/38*** *(2014.01)*

(21) Anmeldenummer: **07019605.0**

(22) Anmeldetag: **08.10.2007**

(54) **Verfahren zum Laserstrahlschneiden eines metallischen Bauteils**

Method for laser beam cutting of a metal part

Procédé de coupe au laser d'un élément de construction métallique

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **09.11.2006 DE 102006052824**

(43) Veröffentlichungstag der Anmeldung:
**14.05.2008 Patentblatt 2008/20**

(73) Patentinhaber:
• **Erlas Erlanger Lasertechnik GmbH**
  **91056 Erlangen (DE)**
• **Bayerische Motoren Werke Aktiengesellschaft**
  **80809 München (DE)**

(72) Erfinder:
• **Hoffmann, Peter, Prof.**
  **90425 Nürnberg (DE)**

• **Dierken, Roland, Dr.**
  **91094 Bräuningshof (DE)**
• **Hornig, Hans**
  **83536 Gars (DE)**
• **Berndl, Jürgen**
  **85405 Nandlstadt (DE)**

(74) Vertreter: **Negendanck, Matthias**
**Nordostpark 78**
**90411 Nürnberg (DE)**

(56) Entgegenhaltungen:
EP-A1- 0 460 338      EP-A1- 0 770 448
EP-A2- 1 433 563      DE-A1- 10 054 853
DE-A1- 10 133 341     DE-A1- 10 162 379
JP-A- 2002 113 587    US-A- 5 223 692

**Beschreibung**

Die Erfindung betrifft ein Verfahren zum Laserstrahlschneiden eines metallischen Bauteils entlang einer Schnittlinie, wobei zur Erzeugung eines Schnittspalts in dem Bauteil die Schnittlinie von einem Laserstrahl mehrfach abgefahren wird.

Das Laserstrahlschneiden hat sich mittlerweile als gängige Technologie in der Fertigung etabliert. Üblicherweise wird bei diesem Trennverfahren das zu trennende Bauteil mit dem Laserstrahl einmalig überfahren, wobei durch den Energieeintrag des Laserstrahls sowie ergänzend durch ein Schutz- oder Arbeitsgas eine durchgängige Schnittfuge in dem Bauteil erzeugt wird, die eine Trennung des Bauteils begründet. Übliche Laserstrahlschneidverfahren sind das Schmelz-, Brenn- und Sublimierschneiden.

Obwohl das Laserstrahlschneiden eine sehr hohe Bearbeitungsgeschwindigkeit erlaubt, führt der Energieeintrag des Laserstrahls zu einer deutlichen Erwärmung des Bauteils. Als Folge können Verzug, Deformation bzw. Schädigung des Bauteils oder eine mangelnde Trennung, insbesondere im Bereich des Schnittanfangs beziehungsweise Schnittendes, auftreten.

Die Druckschrift EP 0460338A1 offenbart ein Verfahren und eine Vorrichtung zum Schneiden von Material. Die in der Druckschrift genannte Aufgabe ist es, Materialien nachbearbeitungsfrei zu trennen und insbesondere magnetisierbares Material ohne negative Beeinflussung der Magnetisierbarkeit zu schneiden. Zur Lösung dieser Aufgabe wird vorgeschlagen, einen mit einer Frequenz von mehr als 1 kHz gepulsten Laser zu verwenden, der das Material entlang der gewünschten Bahn durch ein Aneinanderreihen relativ zur Bahnlänge kleiner, sich überlappender, durchgängiger Bohrungen zu schneiden, wobei die Bahn mehrmals durchfahren wird, um die Ränder zwischen den einzelnen Bohrungen zu glätten.

Die Druckschrift DE 10133341 A1, die wohl den nächstkommenden Stand /3 der Technik bildet, betrifft ein Verfahren, wobei ein hartes Material wiederholt entlang der Schnittachse mit dem Fokus eines Laserstrahls überstrichen wird, wobei die Breite des Schnittes durch eine Bewegung des Fokus vertikal zur Schnittachse aufgeweitet wird und wobei der Strahl bei Vergrößerung der Schnitttiefe durch selbsttätige Justierung des Fokussiermittels auf den Boden des Schnittes nachfokussiert wird. Als besonders vorteilhafte Ausführung der Erfindung wird ein sogenanntes "Laserskalpell" vorgestellt, wobei mit einem gütegeschalteten CO2-Laser oder einem TEA-CO2-Laser Schnitte von 10 mm Tiefe in Knochengewebe einbringbar sind.

Der Erfindung liegt die Aufgabe zugrunde, ein Verfahren zum Laserstrahlschneiden sowie eine entsprechend angepasste Vorrichtung vorzuschlagen, die eine hohe Schnittqualität und eine geringe Schädigung der Schnittnahtbereiche begründet.

Diese Aufgabe wird durch ein Verfahren zum Laserstrahlschneiden mit den Merkmalen des Anspruchs 1 gelöst. Bevorzugte und/oder vorteilhafte Ausführungsformen der Erfindung sind durch die Unteransprüche, die nachfolgende Beschreibung beziehungsweise die beigefügten Figuren gegeben.

Das erfindungsgemäße Verfahren ist zum Laserstrahlschneiden eines metallischen Bauteils entlang einer Schnittlinie ausgebildet. Prinzipiell kann das metallische Bauteil beliebig verkörpert sein, also zum Beispiel als ebenes Blech, Profil oder mit einer dreidimensionalen Geometrie. Die Schnittlinie bezeichnet den Verlauf des geplanten Schnittspaltes zur Trennung des metallischen Bauteils. Zur Erzeugung des Schnittspalts in dem Bauteil wird die Schnittlinie von einem Laserstrahl mehrfach mit überlappenden Bahnen abgefahren. Hierzu wird der Laserstrahl, insbesondere der Laserfokus beziehungsweise der Laserfokusbereich, mehrfach oder mehrmalig entlang der Schnittlinie oder über die Schnittlinie bzw. Schnittkontur geführt.

Erfindungsgemäß ist vorgesehen, dass bei jedem Abfahren der Schnittlinie durch den Laserstrahl die Tiefe des Schnittspaltes vergrößert wird. In Abgrenzung zu den bekannten Stand der Technik wird bei dem neuen Verfahren nicht eine durchgängige Einzelbohrung an die nächste gereiht, um das metallische Bauteil zu trennen, sondern der Schnittspalt wird durch ein mehrfaches Abfahren mit dem Laserstrahl schrittweise in das Material vertieft bzw. eingegraben.

Der Vorteil des erfindungsgemäßen Verfahrens liegt insbesondere darin, dass der Wärmeeintrag in das metallische Bauteil sehr gering ist und zudem Emissionen auf der dem Laserstrahl abgewandten Seite, also der Rückseite des metallischen Bauteils, minimiert werden. Somit kann das vorgeschlagene Verfahren auch vorteilhaft bei Bauteilen eingesetzt werden, die nachträglich - nach dem Laserstrahlschneiden - insbesondere im Bereich der Rückseite nicht mehr gereinigt werden können oder sollen.

Bei einer bevorzugten Ausführung des Verfahrens wird die Schnittlinie mindestens 10-fach, vorzugsweise mindestens 30-fach, insbesondere mindestens 50-fach von dem Laserstrahl abgefahren. Auf diese Weise wird der Schnittspalt über mehrfache Abstufungen, also bevorzugt über mindestens 10, 30 beziehungsweise 50 Abstufungen erzeugt beziehungsweise in das Material des Bauteils eingegraben.

Im Allgemeinen kann das Verfahren bei einer beliebigen, insbesondere auch offenen Schnittlinie eingesetzt werden.

Bevorzugt ist die Schnittlinie jedoch geschlossen ausgebildet, so dass mit dem Verfahren ein zum Beispiel rundes, insbesondere kreisrundes oder rechteckiges, insbesondere quadratisches Mittelstück aus dem metallischen Bauteil schneidbar ist. Ein besonderer Vorteil bei dieser Ausbildung des Verfahrens ist es, dass das ausgeschnittene Mittelstück aufgrund der verfahrensbedingt geringen Schnittspaltbreite nicht in das metallische Bauteil fällt, sondern in der Ausschnittsöffnung hängen bleibt. Aufgrund der daraus resultierenden, definierten Position des ausgeschnittenen Mittelstücks ist eine nachfolgende Entnahme auf einfache Weise möglich.

Bevorzugt wird bei dem Verfahren die Vertiefung des Schnittspalts durch einen abtragenden Prozess erreicht. Bei einem abtragenden Prozess erfolgt insbesondere ein direkter Übergang des Materials des Bauteils von einem festen zu einem gasförmigen Aggregatszustand und/oder ein Sublimationsabtrag des Materials.

Bevorzugt wird ein Laserstrahl mit einer Pulsfrequenz von 1 kHz bis 50. kHz verwendet, so dass eine annehmbare Bearbeitungsgeschwindigkeit zur Erzeugung des Schnittspalts erreichbar ist. Der Laserstrahl weist insbesondere Pulse mit einer Pulslänge im Bereich von 0,1 $\mu$s bis 10 $\mu$s, vorzugsweise von 0,5 $\mu$s bis 5 $\mu$s und insbesondere mit etwa 1 $\mu$s Pulslänge auf. Die genannten, relativ kurzen Pulslängen führen dazu, dass der lokale Energieeintrag gering ist und insbesondere ein Sublimationsabtrag des Materials des metallischen Bauteils erfolgt. Insbesondere führt die hohe Leistungsdichte der gepulsten Laserstrahlung zu einem Verdampfen des Werkstoffs, so dass das Material mit einer hohen kinetischen Energie auf der Werkstückoberfläche gegenüber der Strahleneinwirkungsrichtung abtransportiert wird.

Um jedoch eine ausreichende Leistungsdichte bei der Bearbeitung sicherzustellen weist der Laserstrahl bevorzugt eine M-Zahl kleiner als 2, vorzugsweise kleiner als 1,5, insbesondere kleiner oder gleich 1,2 auf. Bevorzugt sind die weiteren Laserstrahlparameter so eingestellt, dass ein abtragender Prozess erfolgt.

Bei dem erfindungsgemäßen Verfahren sind Laserstrahlen mit einer Wellenlänge im Bereich von 1000 nm, also insbesondere 1064 nm, 1070 nm oder 1030 nm, oder eine dazu frequenzverdoppelte Wellenlänge besonders vorteilhaft. Die Laserstrahlen können mittels eines Nd:YAG-Lasers oder eines Yb:YAG-Lasers, insbesondere in Bauart eines Scheibenlasers erzeugt werden. Die genannten Wellenlängen erlauben eine gute Einkopplung der Laserstrahlung in metallische Flächen sowie in Beschichtungen oder Lackierungen, die optional auf dem metallischem Bauteil aufgebracht sind.

Bei einer bevorzugten Ausbildung des Verfahrens wird der Laserstrahl während des Abfahrens der Schnittlinie gewobbelt. Das Wobbeln bezeichnet eine Überlagerung der Bewegung des Laserstrahls entlang der Schnittlinie mit einer dazu senkrechten oder zumindest abschnittsweise senkrechten Bewegung, insbesondere einer überlagerten Kreisbewegung, so dass beispielsweise eine spiralförmige Bewegungsbahn des Laserstrahls auf dem metallischen Bauteil entsteht. Alternativ kann auch in einfacher Weise der Laserstrahl senkrecht zur Bewegungsbahn beziehungsweise zur Schnittlinie oszillierend bewegt werden. Durch das Wobbeln wird die Spurbreite der Laserstrahls künstlich erhöht, so dass der resultierende Schnittspalt verbreitert und z.B. die Sicherheit der Trennung des metallischen Bauteils erhöht wird. Die Spurbreite oder Amplitude der Wobbelbewegung ist vorzugsweise kleiner als 0,5 mm, insbesondere kleiner als 0,2 mm.

Bei einer Weiterbildung des Verfahrens werden in Abhängigkeit der Tiefe des Schnittspalts verschiedene Parametersätze, insbesondere mindestens zwei verschiedene Parametersätze für den Laserstrahl verwendet. Diese Ausbildung berücksichtigt den Umstand, dass es beispielsweise vorteilhaft ist, den Schnittspalt bei geringen Tiefen breiter auszugestalten als bei größeren Tiefen, um einer Abschattung des Laserstrahls durch den Schnittspalt vorzubeugen.

Als besonders vorteilhaft hat sich dabei gezeigt, den Wobbeldurchmesser, beziehungsweise die Wobbelamplitude in Abhängigkeit der Tiefe des Schnittspalts anzupassen. Insbesondere wird der Wobbeldurchmesser beziehungsweise die Wobbelamplitude bei größerer Tiefe reduziert, insbesondere um das Abtragsvolumen und/oder Schnittspaltvolumen gering zu halten.

Bevorzugt wird das erfindungsgemäße Verfahren schutzgas-und/oder arbeitsgasfrei durchgeführt. Diese kostengünstige Ausführungsalternative wird ermöglicht, da der Abtragungsprozess kein Arbeitsgas benötigt. Auch das Schutzgas kann optional eingespart werden, da aufgrund des geringen Energieeintrags Oxidationen des Materials stark vermindert sind.

Das erfindungsgemäße Verfahren wird vorzugsweise bei metallischen Bauteilen mit einer Blechdicke von weniger als 2 mm, insbesondere weniger als 1 mm eingesetzt. Bei den genannten Blechdicken ist die Abschattung des Laserstrahls durch den Schnittspalts noch so gering, dass eine angemessene Schneidegeschwindigkeit erzielbar ist.

Besonders bevorzugt wird das erfindungsgemäße Verfahren angewendet, wenn das metallische Bauteil eine Beschichtung aufweist. Erfindungsgemäß wird das Verfahren angewendet, wenn das metallische Bauteil ergänzend oder alternativ eine Lackierung aufweist. Ein maßgeblicher Vorteil des Verfahrens liegt nämlich auch darin, dass aufgrund des geringen Energieeintrags die Beschichtung und/oder die Lackierung des Bauteils im schnittnahen Bereich bzw. in den unmittelbar benachbarten Bereichen zu dem Schnitt nicht oder nur geringfügig beschädigt wird.

Dieser Vorteil ermöglichen den Einsatz des erfindungsgemäßen Verfahrens beispielsweise bei dem Einbringen von Öffnungen in lackierte, insbesondere endlackierte Objekte, insbesondere Autokarosserien. Üblicherweise ist ein Laserstrahlschneiden derartiger Bauteile nicht möglich, da der Energieeintrag zu einer Beschädigung beziehungsweise zu einem Aufquellen der Lackierung führen würde.

Versuchsreihen haben jedoch gezeigt, dass durch das erfindungsgemäße Verfahren die Lackierung beziehungsweise die Beschichtung überraschenderweise sogar im schnittnahen Bereich nicht beschädigt wird. Hier liegt ein großes Potential des erfindungsgemäßen Verfahrens, da es ermöglicht in der Fertigung bei dem Endprodukt, insbesondere nach einer Lackierung, Individualisierungen, wie z.B. Öffnungen zur Aufnahme von Befestigungsmitteln, in das Endprodukt einzubringen.

Nachfolgend wird eine Vorrichtung beschrieben, die zur Anwendung des zuvor beschriebenen Verfahrens ausgebildet ist.

vorzugsweise weist die Vorrichtung eine Saugglocke zur Absaugung der Prozessemissionen auf, die auf dem Bauteil aufsetzbar ist. Durch diese Ausbildung der Vorrichtung ist gewährleistet, dass die beim erfindungsgemäßen Verfahren auftretenden, meist starken Prozessemissionen effektiv entfernbar sind. Bevorzugt ist die Saugglocke zur Absaugung der Prozessemissionen nach dem Venturi-Prinzip ausgebildet. Bevorzugt umfasst die Saugglocke eine Cross-Jet-Düse, mittels der im Betrieb ein Gasstrom parallel zu der Oberfläche des metallischen Bauteils erzeugbar ist, so dass, insbesondere dem Venturi-Prinzip folgend, ein Unterdruck an der Bearbeitungsstelle erzeugt wird und die beim Schneiden auftretenden Emissionen abgesaugt bzw. abtransportiert werden.

Bei einer bevorzugten Weiterbildung ist die Saugglocke laserstrahlendicht ausgebildet, so dass diese im auf dem Bauteil aufgesetzten Zustand den Laserstrahl von der Umgebung isoliert. Auf diese Weise wird eine Kapselung der Vorrichtung erreicht und der Laserstrahlsicherheit entsprochen. Eine kostenintensive, laserstrahlsichere Bearbeitungskabine kann eingespart werden.

Um zum einen die Absaugung der Prozessemissionen zu unterstützen und zum anderen die Lasersicherheit zu gewährleisten, weist die Saugglocke einen Kunststoff- oder Gummiadapter auf, der als Zwischenteil zwischen Saugglocke und Bauteil eingesetzt wird. Bevorzugt ist der Adapter als ein den Gemäß einer bevorzugten Konkretisierung der Vorrichtung umfasst die Vorrichtung eine Aufnahme für eine Autokarosserie, die beispielsweise als Transportwagen ausgebildet ist. Optional weist die Vorrichtung - insbesondere für die Anwendung des Laserstrahlschneidens von Karosserien - weitere Komponenten auf, wie z.B. ein Sensorsystem, welches zur Lagedetektion der in die Aufnahme eingebrachten Karosserie ausgebildet ist.

Die Vorteile der Erfindung liegen zusammengefasst insbesondere darin, dass die mit den einzelnen Laserpulsen eingebrachte Energie zu einem kontrollierten Abtrag führt. Zunächst wird bei bevorzugten Applikationen eine lackierte Schicht und in der Folge bei wiederholtem Abfahren der Schnittkontur das Blechsubstrat insbesondere über einen Sublimationsabtrag entfernt. Dadurch gelangen keine Emissionen auf die dem Laserstrahl gegenüberliegende Blechseite, solange die Trennung nicht vollständig erfolgt ist. Die überwiegend gegen die Strahlrichtung austretende Emission wird bevorzugt mittels einer Absaugglocke abgesaugt, so dass diese sich nicht auf der lackierten Oberfläche niederschlagen können. Zugleich wird der optische Weg für den Laserstrahl freigehalten. Durch das erfindungsgemäße Verfahren werden z. B. auch korrosionsverursachende Niederschläge, beispielsweise in geschlossenen Profilen verhindert.

Weitere Merkmale, Vorteile und Wirkungen der Erfindung ergeben sich aus der nachfolgenden Beschreibung bevorzugter Ausführungsbeispiele und den beigefügten Figuren. Dabei zeigen: Ausf

ührungsbeispiele und den beigefügten Figuren. Dabei zeigen:

Fig. 1 eine Draufsicht auf ein zu schneidendes Bauteil zur Illustration des erfindungsgemäßen Verfahrens;

Fig. 2 mehrere Querschnittsdarstellungen entlang der Schnittlinie II-II in Figur 1 zur Illustration des schrittweise Vertiefens des Schnittspalts bei gemäß dem erfindungsgemäßen Verfahren;

Fig. 3 eine Draufsicht einer erfindungsgemäßen Ausführungsalternative des Verfahrens;

Fig. 4 einen Querschnitt durch das zu schneidende Bauteil mit der Darstellung des Aufbaus;

Fig. 5 eine bevorzugte Applikation für das erfindungsgemäße Verfahren gemäß der Figuren 1, 2 bzw. 3;

Fig. 6 ein Ausführungsbeispiel einer Vorrichtung in Form eines Bearbeitungskopfs;

Fig. 7 ein Portal zur Umsetzung der bevorzugten Applikation gemäß Figur 5 umfassend den Bearbeitungskopf gemäß Figur 6.

Einander entsprechende oder gleiche Teile oder Größen sind mit den gleichen oder entsprechenden Bezugsziffern versehen.

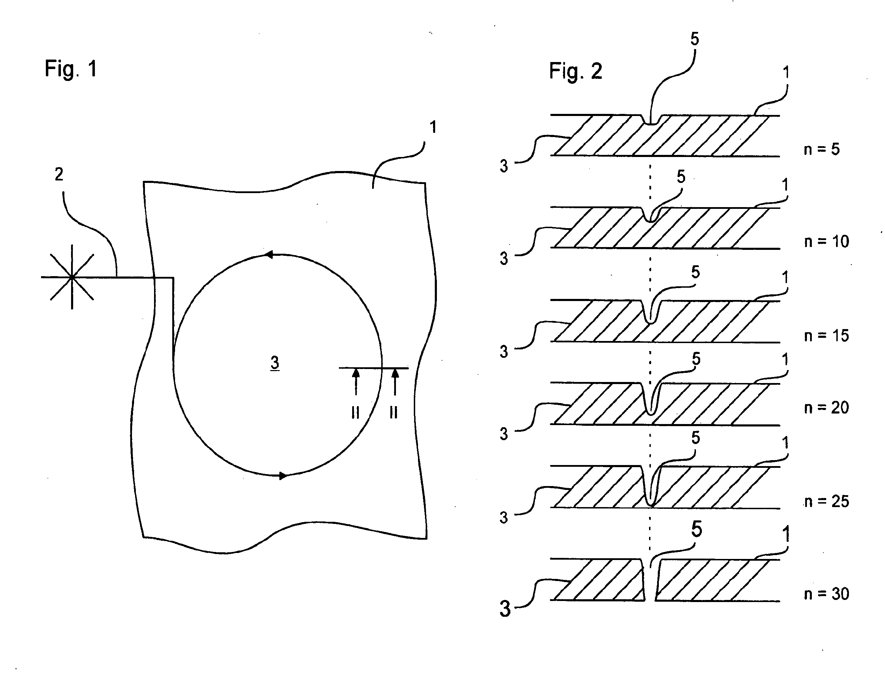

Die Figur 1 zeigt zur Illustration des erfindungsgemäßen Verfahrens in einer schematischen Draufsicht ein Bauteil 1, aus welchem mittels eines Laserstrahl 2 ein Mittelstück in Form einer kreisrunden Scheibe 3 herausgeschnitten wird. Die Bahnen, insbesondere mehr als 10-fach über- bzw. abgefahren, um stufenweise einen Schnittspalt 5 in dem Bauteil 1 zu erzeugen.

Die Fig. 2 illustriert die Erzeugung des Schnittspalts 5 entlang der Schnittlinie 4. In der Figur 2 sind untereinander Querschnittsdarstellungen entlang der zeichnerischen Schnittlinie II-II in Figur 1 dargestellt, die den Zustand des Schnittspalts 5 bei steigender Anzahl von Abfahrungen durch den Laserstrahl 2 repräsentieren.

Während bei der obersten Darstellung nach fünfmaligen Überfahren der Schnittlinie 4, also n = 5, der Schnittspalt 5 noch relativ flach ausgebildet ist, wächst dieser mit steigender Anzahl der Überfahrungen aufgrund des Materialabtrags durch den Laserstrahl 2 bei jeder Überfahrung stetig in die Tiefe. Die Darstellungen der nachfolgenden Zeilen zeigen den Schnittspalt 5 nach 10, 15, 20, 25 und schließlich 30-maligem Überfahren, wobei nach dem 30ten Überfahren der nun durchgängige Schnittspalt 5 das Bauteil 1 vollständig teilt. Es sei darauf hingewiesen, dass die Anzahl der Überfahrungen nur beispielhaft genannt sind und in Abhängigkeit der Laserparameter und des Materials variieren können.

Die Entfernung des Materials zur Bildung des Schnittspalts 5 erfolgt über einen abtragenden Prozess, insbesondere derart, dass das abzutragende Material einen direkten Aggregatszustandsübergang von fest zu gasförmig durchführt und als Prozessemission entgegen der Einfallsrichtung des Laserstrahls 2 aus dem Bauteil 1 bzw. aus dem Schnittspalt 5 entweicht. Der abtragende Prozess bringt nur eine geringe Streckenenergie in das Bauteil 1 ein, so dass keine oder nahezu keine thermischen Schädigungen in den schnittnahen Bereichen· des Bauteils 1 bzw. der Scheibe 3 auftreten.

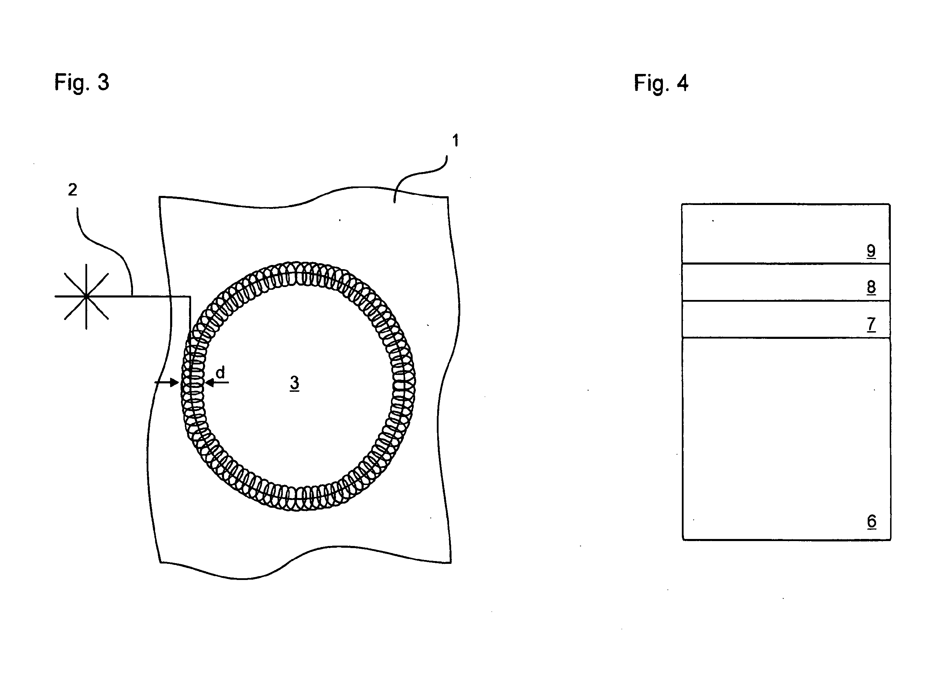

Die Figur 3 illustriert eine Abwandlung des in den Figuren 1 und 2 gezeigten Verfahrens, wobei der Laserstrahl 2 senkrecht zu dem Verlauf der Schnittlinie 4 bewegt wird, so dass die Spurbreite d des Laserstrahls 2 und damit die Breite des resultierenden Schnittspalts 5 erhöht wird. Diese Verfahrensalternative hat den Vorteil, dass durch den verbreiterten Schnittspalt 5 der Laserstrahl 2 nur geringfügig abgeschattet wird, wenn ein Materialabtrag in den tieferen Lagen des Bauteils 1 stattfinden soll. Die Zusatzbewegung des Laserstrahls 2 - auch wobbeln genannt - ist beispielsweise eine dem Vorschub überlagerte Kreiselbewegung des Laserstrahls um die Vorschubachse. Typische Vorschubgeschwindigkeiten für die überlagerte Wobbelbewegung sind etwa 1200 mm pro sec. Eine typische Amplitude der Wobbelbewegung, die der Spurbreite d des Laserstrahls entspricht, beträgt 200 $\mu$m.

Die Figur 4 zeigt einen schematischen Querschnitt durch das Bauteil 1, welches in diesem Ausführungsbeispiel als Stahlblech 6 mit Lackierung ausgebildet ist, welches von der lackierten Seite bearbeitet wird. Das Stahlblech 6 hat eine Dicke von etwa 0,7 mm und ist durch eine Zinkschicht 7 mit einer Dicke von circa 20 $\mu$m geschützt. Auf der Zinkschicht 7 ist eine Farbschicht 8 angeordnet, die typischerweise eine Dicke von circa 30 $\mu$m aufweist. Bei der Farbschicht kann es sich um eine beliebige Farbschicht, insbesondere eine Autofarbe oder eine Metallicfarbe handeln. Den Abschluss bildet eine Klarlackschicht 9 mit einer Dicke von etwa 40 $\mu$m.

Bei einer beispielhaften Realisierung des erfindungsgemäßen Verfahrens wurde zum Laserstrahlschneiden des Bauteils 1 ein Q-Switch Yb:YAG-Laser mit einer Wellenlänge von 1030 nm eingesetzt. Der Laser hatte eine mittlere Laserleistung von 60 Watt und stellt den Laserstrahl 2 in einem TEM00-Mode zur Verfügung. Die Pulslänge betrug circa 1 $\mu$s, die Pulsfrequenz 20 kHz. Die Strahlführung erfolgte über einen Scanner, der mit einer Fokussierlinse mit einer Brennweite f = 163 mm ausgerüstet war. Sehr gute Schneidergebnisse wurden mit einer zweistufigen Prozessführung mit den nachfolgenden Bearbeitungsparametern erreicht:

Vorschubgeschwindigkeit des Laserstrahls:

$$v = 150 \text{ mm/s} \quad (+/- 5\%)$$

Wobbelgeschwindigkeit:

$$v_w = 1200 \text{ mm/s} \quad (+/- 5\%)$$

Wobbelamplitude:

$$d_w = 200 \text{ } \mu m \quad (+/- 10\%)$$

für die ersten 35 Umläufe

$$d_w = 155 \text{ } \mu m \quad (+/- 10\%)$$

für die letzten 15 Umläufe

Mit diesen Prozessparametern wurde eine Bearbeitungszeit von 21 sec bei einem Lochdurchmesser von 20 mm erreicht. Die Untersuchungen haben zudem gezeigt, dass die Lackierung beziehungsweise die Beschichtung im schnittnahen Bereich des Bauteils 1 nahezu unverändert verbleibt. Dies ist auf den geringen thermischen Eintrag aufgrund des abtragenden Laserprozesses zurückzuführen. Die Schnittspaltweite im Lack betrug zwischen 300 und 400 $\mu$m, die Schnittspaltweite auf der Blechoberseite 140 bis 160 $\mu$m und die Schnittspaltbreite an der Blechunterseite 40 bis 60 $\mu$m.

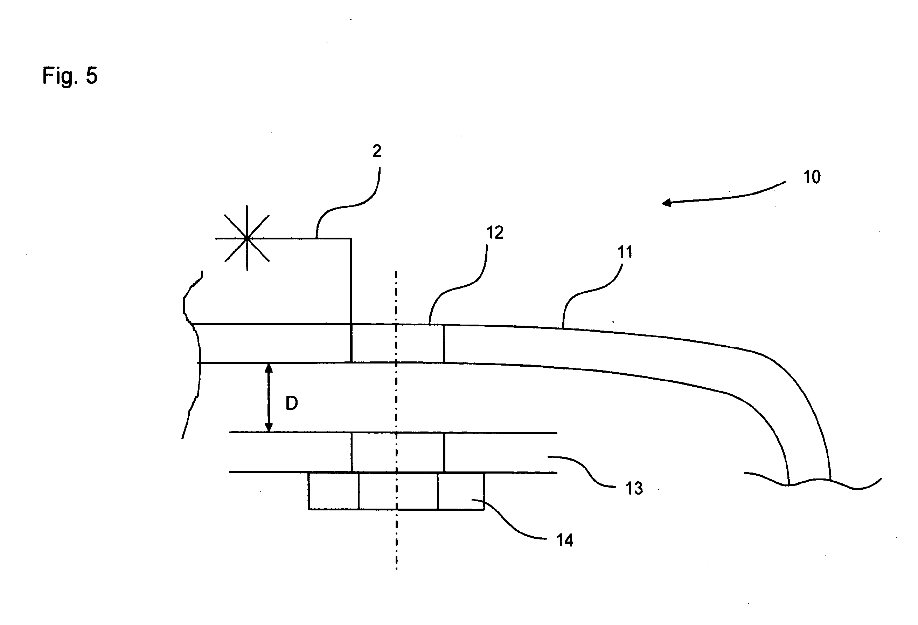

Die Figur 5 zeigt ein typisches Anwendungsbeispiel für das erfindungsgemäße Verfahren bei der Bearbeitung einer lackierten Autokarosserie, wobei ein Detailausschnitt im Dachbereich 10 dargestellt ist, um die Anwendung "Einbringen von Öffnungen zur Montage einer Reling" zu illustrieren.

Bei dieser Bearbeitungsaufgabe wird in eine lackierte Außenhaut 11 mit beispielsweise dem in Figur. 4 gezeigten Aufbau eine Öffnung 12 mit einem Durchmesser von mehreren Millimetern, z.B. 20 mm, eingebracht. Unterhalb der lackierten Außenhaut 11 ist ein Unterblech 13 angeordnet, welches von der Außenhaut 11 mit einem Abstand D beabstandet ist. An der der Außenhaut 11 abgewandten Seite des Unterblechs 13 ist eine Einzugsmutter 14 angeordnet. Zur Montage der Reling wird eine Schraube durch die zu schneidende Öffnung 12 und eine deckungsgleiche Öffnung in dem Unterblech 13 geführt und in der Einzugsmutter 14 eingeschraubt.

Wie aus der Darstellung zu entnehmen ist, ist der Zwischeribereich zwischen dem Unterblech 13 und der Außenhaut 11 für eine Nachbehandlung nicht zu erreichen. Zudem muss eine Beschädigung der Lackierung im Dachbereich 10 vermieden werden.

Bei der Anwendung des erfindungsgemäßen Verfahrens wird mittels des Laserstrahls 2 durch ein mehrfaches Abfahren und einen abtragenden Prozess die Öffnung 12 aus der Außenhaut 11 herausgeschnitten und zwar ohne die Lackierung beziehungsweise Beschichtung im Dachbereich 10 zu beschädigen, so dass die Außenhaut 11 bereits im endlackierten Zustand vorliegen kann bzw. vorliegt. Durch die Prozessführung ist zudem sichergestellt, dass der Großteil der Prozessemissionen nicht in den Zwischenraum fällt, sondern nach außen geleitet wird, da erst mit den letzten Abfahrungen der Schnittlinie 4 der Öffnung 12 mit dem Laserstrahl 2 eine offene Verbindung von dem Bearbeitungsort zu dem Zwischenraum geschaffen wird. Der Ausschnitt der Öffnung 12 in Form der Scheibe 3 wird nach außen abgehoben oder abgesaugt.

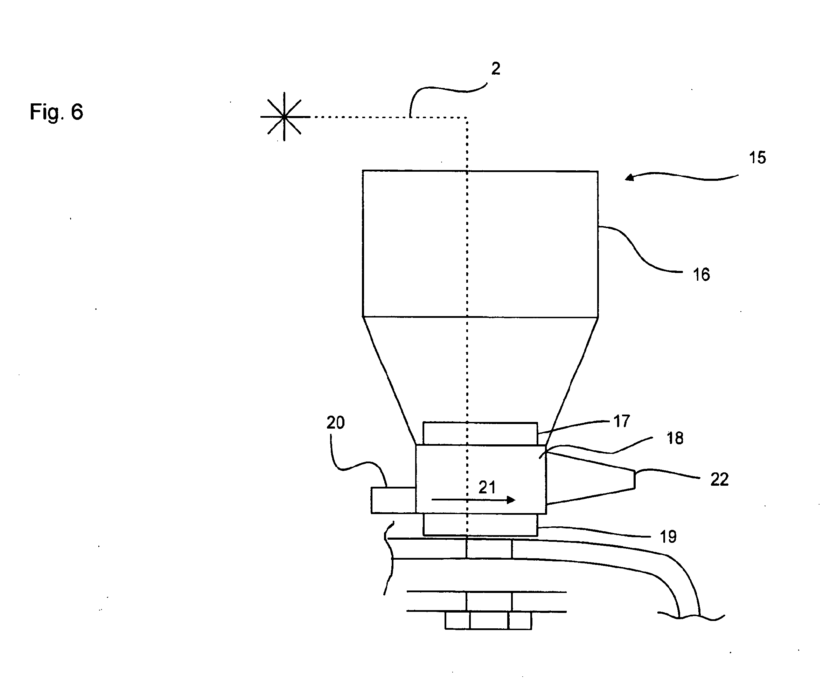

Die Figur 6 zeigt ein Ausführungsbeispiel einer Vorrichtung zur Durchführung des erfindungsgemäßen Verfahrens in Form eines Bearbeitungskopfs 15. Der Bearbeitungskopf 15 weist einen Scanner 16 zur lateralen Ablenkung des durch den Bearbeitungskopf 15 geführten Laserstrahls 2 auf. Der Laserstrahl 2 durchquert nachfolgend eine Schutzscheibe 17 und tritt in eine Saugglocke 18 ein, die über eine Gummidichtung 19 auf der Außenhaut 11 des Dachbereichs 10 aufliegt.

Die Saugglocke 18 umfasst zur Erzeugung eines parallel zu der zur Bearbeitungsoberfläche der Außenhaut 11 gerichteten Gasstroms (Pfeil 21) eine Flachdüse oder Cross-Jet 20. Der Gasstrom tritt an der Ausblasseite der Saugglocke 18 über eine Abluftdüse 22 aus. Durch die derartig generierte Gasströmung wird dem Venturi-Effekt folgend ein Unterdruck im Bereich der Bearbeitungsstelle erzeugt, so dass die beim Schneiden bzw. Abtragen auftretenden Emissionen zuverlässig über die Abluftdüse 22 entsorgt werden. Bei einer geeigneten Prozessführung ist es optional möglich, die ausgeschnittene Scheibe 3 über den Gasstrom 21 abzusaugen und ebenfalls über die Abluftdüse 22 auszuwerfen. Alternativ kann die Scheibe 3 mittels eines Greifers oder eines Magnetfingers entnommen werden.

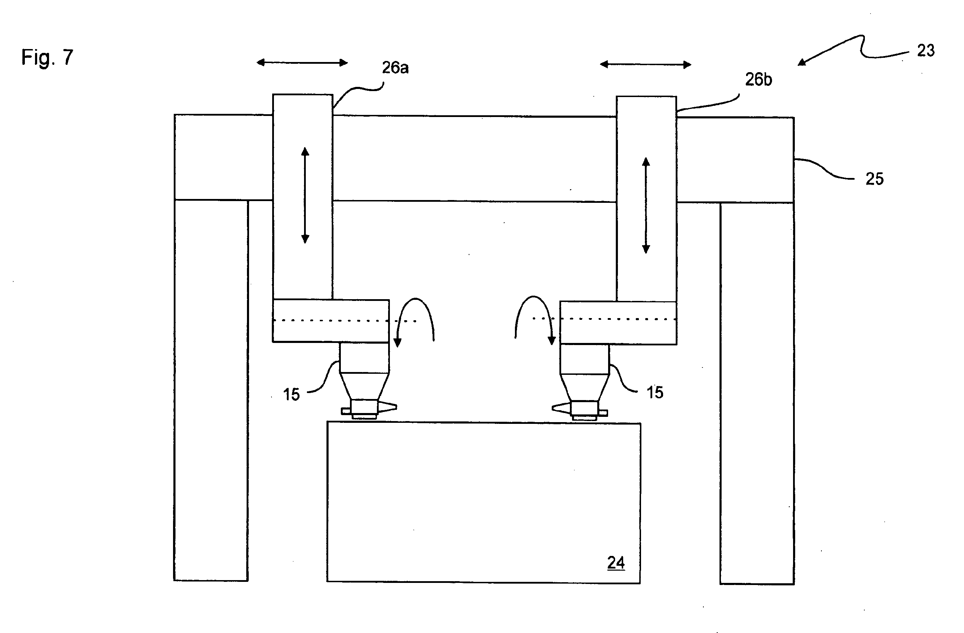

Die Figur 7 zeigt ein Portal 23 zur Bearbeitung eines schematisch dargestellten Fahrzeugs beziehungsweise einer Fahrzeugkarosserie 24. Das Portal 23 weist zwei unabhängig voneinander auf einer ortsfesten Brücke 25 bewegbar montierte Robotersysteme 26 a beziehungsweise 26 b auf, an deren freien Enden jeweils einen Bearbeitungskopf 15 gemäß Figur 6 angeordnet sind. Die Robotersysteme 26 a, b weisen mindestens drei Bewegungsfreiheitsgrade auf, die eine Verschiebung der Bearbeitungsköpfe 15 entlang der Brücke 23, senkrecht zu der Brücke 23 sowie eine Rotation um eine Drehachse parallel zu der Brücke 23 erlauben.

Bei der Bearbeitung der Karosserie 24 wird diese beispielsweise auf einem Transportwagen unter die Brücke 23 gefahren und gegebenenfalls indexiert beziehungsweise arretiert. Ein Positionserkennungssensor, zum Beispiel ein taktiler Sensor (nicht dargestellt), fährt in die Karosserie 24 ein und misst die Lage von Referenzpunkten, wie zum Beispiel der Einzugsmutter 14 im Unterblech. In einem weiteren Schritt werden die Bearbeitungsköpfe 15 gemäß der erfassten Messdaten positioniert und auf dem Dach aufgesetzt. Über weitere Sensoren (nicht dargestellt) wird die Positionierung der Gummidichtung 19 und der korrekte Fokusabstand überprüft, so dass die Bearbeitung erst nach dieser Überprüfung freigegeben wird.

In einem nächsten Schritt werden von den zwei Beabreitungsköpfe 15 synchron bzw. simultan Öffnungen 12 in die Karosserie 24 geschnitten. Für das Einbringen weiterer Öffnungen werden die Vorrichtungen 15 zurückgefahren, die Karosserie 24 weiter positioniert und entsprechend den oben geschilderten Ablauf die weiteren Öffnungen eingebracht. Alternativ können die Bearbeitungsköpfe 15 die Öffnungen nacheinander einbringen, insbesondere wenn diese nicht von zwei getrennten Laserquellen, sondern von einer gemeinsamen Laserquelle versorgt werden.

**Patentansprüche**

1. Verfahren zum Laserstrahlschneiden eines Bauteils (1) entlang einer Schnittlinie (4), wobei zur Erzeugung eines Schnittspalts (5) in dem Bauteil (1) die Schnittlinie (4) von einem Laserstrahl (2) mehrfach abgefahren wird,
   wobei
   bei jedem Abfahren der Schnittlinie (4) die Tiefe des Schnittspalts (5) vergrößert wird,
   wobei das Bauteil (1) metallisch ist und eine Lackierung aufweist.

2. Verfahren nach Anspruch 1, **dadurch gekennzeichnet, dass** die Schnittlinie (4) mindestens 10fach, vorzugsweise mindestens 30fach, insbesondere mindestens 50fach von dem Laserstrahl (2) abgefahren wird.

3. Verfahren nach Anspruch 1 oder 2, **dadurch gekennzeichnet, dass** die Schnittlinie (4) geschlossen ausgebildet ist.

4. Verfahren nach einem der vorhergehenden Ansprüche, **dadurch gekennzeichnet, dass** bei dem Abfahren der Schnittlinie (4) die Tiefe des Schnittspalts (5) mittels eines abtragenden Prozesses vergrößert wird.

5. Verfahren nach einem der vorhergehenden Ansprüche, **dadurch gekennzeichnet, dass** der Laserstrahl (2) Pulse mit einer Frequenz von 1kHz bis 50 kHz und/oder mit einer Pulslänge im Bereich von 0,1µs bis 10 µs, vorzugsweise von 0,5 µs bis 5µs, insbesondere mit etwa 1 µs Pulslänge aufweist.

6. Verfahren nach einem der vorhergehenden Ansprüche, **dadurch gekennzeichnet, dass**. der Laserstrahl (2) eine M-Zahl kleiner als 2, vorzugsweise kleiner als 1,5, insbesondere kleiner oder gleich 1,2 aufweist.

7. Verfahren nach einem der vorhergehenden Ansprüche, **dadurch gekennzeichnet, dass** der Laserstrahl (2) eine Wellenlänge im Bereich von 1000 nm, insbesondere 1064 nm oder 1030 nm, oder eine dazu frequenzverdoppelte Wellenlänge aufweist.

8. Verfahren nach einem der vorhergehenden Ansprüche, **dadurch gekennzeichnet, dass** der Laserstrahl (2) während des Abfahrens gewobbelt wird.

9. Verfahren nach einem der vorhergehenden Ansprüche, **dadurch gekennzeichnet, dass** in Abhängigkeit der Tiefe des Schnittspalts (5) mindestens zwei verschiedene Parametersätze für den Laserstrahl (2) verwendet werden.

10. Verfahren nach Anspruch 8 und Anspruch 9, **dadurch gekennzeichnet, dass** die verschiedenen Parametersätze sich mindestens durch den Wobbel-Durchmesser (d) unterscheiden.

11. Verfahren nach einem der vorhergehenden Ansprüche, **dadurch gekennzeichnet, dass** das Verfahren schutzgas- und/oder arbeitsgasfrei geführt wird.

12. Verfahren nach einem der vorhergehenden Ansprüche, **dadurch gekennzeichnet, dass** das metallische Bauteil (1) eine Blechdicke von weniger als 2 mm, insbesondere weniger als 1 mm aufweist.

13. Verfahren nach einem der vorhergehenden Ansprüche, **dadurch gekennzeichnet, dass** das metallische Bauteil eine Beschichtung (7) aufweist.

14. Verfahren nach einem der vorhergehenden Ansprüche, **dadurch gekennzeichnet, dass** das Verfahren die Beschichtung (7) und/oder die Lackierung (8,9) im schnittnahen Bereich nicht beschädigt.

15. Verfahren nach einem der vorhergehenden Ansprüche, **dadurch gekennzeichnet, dass** eine Öffnung (12) in eine lackierte, insbesondere endlackierte Autokarosserie (10, 24) geschnitten wird.

**Claims**

1. A method for laser beam cutting of a component (1) along a cutting line (4), wherein for producing a cutting gap (5) in the component (1), a laser beam (2) moves along the cutting line (4) more than once, wherein
at each move along the cutting line (4) the depth of the cutting gap (5) is increased,
wherein the component (1) is metallic and comprises a varnish.

2. The method according to claim 1, **characterized in that** the laser beam (2) moves along the cutting line (4) at least 10 times, preferably at least 30 times, in particular at least 50 times.

3. The method according to claim 1 or 2, **characterized in that** the cutting line (4) is continuous.

4. The method according to any one of the preceding claims, **characterized in that** during the move along the cutting line (4), the depth of the cutting gap (5) is increased by means of a material-removing process.

5. The method according to any one of the preceding claims, **characterized in that** the laser beam (2) comprises pulses with a frequency of 1 kHz to 50 kHz and/or with a pulse length in the range of 0.1 $\mu$s to 10 $\mu$s, preferably from 0.5 $\mu$s to 5 $\mu$s, in particular with a pulse length of about 1 $\mu$s.

6. The method according to any one of the preceding claims, **characterized in that** the laser beam (2) has an M number of less than 2, preferably less than 1.5, in particular less than or equal to 1.2.

7. The method according to any one of the preceding claims, **characterized in that** the laser beam (2) comprises a wavelength of about 1000 nm, in particular 1064 nm or 1030 nm, or a wavelength frequency-doubled to this.

8. The method according to any one of the preceding claims, **characterized in that** the laser beam (2) is wobbled during movement along the cutting line.

9. The method according to any one of the preceding claims, **characterized in that** at least two different parameter sets for the laser beam (2) are used, depending on the depth of the cutting gap (5).

10. The method according to claim 8 and claim 9, **characterized in that** the different parameter sets differ at least by the wobble diameter (d).

11. The method according to any one of the preceding claims, **characterized in that** the method is executed free of shielding gas and/or working gas.

12. The method according to any one of the preceding claims, **characterized in that** the metallic component (1) has a sheet metal thickness of less than 2 mm, in particular less than 1 mm.

**13.** The method according to any one of the preceding claims, **characterized in that** the metallic component comprises a coating (7).

**14.** The method according to any one of the preceding claims, **characterized in that** the method does not damage the coating (7) and/or the varnish (8, 9) in the region close to the cut.

**15.** The method according to any one of the preceding claims, **characterized in that** an opening (12) is cut into a painted, in particular a final-painted, car body (10, 24).

**Revendications**

**1.** Procédé de découpe par faisceau laser d'un composant (1), le long d'une ligne de coupe (4), la ligne de coupe (4) étant balayée plusieurs fois par un faisceau laser (2) pour la production d'un trait de coupe (5) dans le composant (1),
la profondeur du trait de coupe (5) étant augmentée lors de chaque balayage de la ligne de coupe (4),
le composant (1) étant métallique et présentant une peinture.

**2.** Procédé selon la revendication 1, **caractérisé en ce que** la ligne de coupe (4) est balayée au moins 10 fois, de préférence au moins 30 fois, en particulier au moins 50 fois par le faisceau laser (2).

**3.** Procédé selon la revendication 1 ou 2, **caractérisé en ce que** la ligne de coupe (4) est constituée de façon fermée.

**4.** Procédé selon l'une des revendications précédentes, **caractérisé en ce que**, lors du balayage de la ligne de coupe (4), la profondeur du trait de coupe (5) est augmentée au moyen d'un procédé d'enlèvement.

**5.** Procédé selon l'une des revendications précédentes, **caractérisé en ce que** le faisceau laser (2) présente des impulsions d'une fréquence de 1 kHz à 50 kHz et/ou d'une durée d'impulsion dans la plage de 0,1 $\mu$s à 10 $\mu$s, de préférence de 0,5 $\mu$s à 5 $\mu$s, en particulier une durée d'impulsion d'environ 1 $\mu$s.

**6.** Procédé selon l'une des revendications précédentes, **caractérisé en ce que** le faisceau laser (2) présente un nombre M inférieur à 2, de préférence inférieur à 1,5, en particulier inférieur ou égal à 1,2.

**7.** Procédé selon l'une des revendications précédentes, **caractérisé en ce que** le faisceau laser (2) présente une longueur d'onde dans la plage de 1 000 nm, en particulier de 1 064 nm ou 1 030 nm, ou une longueur d'onde doublée en fréquence par rapport à cela.

**8.** Procédé selon l'une des revendications précédentes, **caractérisé en ce que**, pendant le balayage, le faisceau laser (2) est vobulé.

**9.** Procédé selon l'une des revendications précédentes, **caractérisé en ce que**, en fonction de la profondeur du trait de coupe (5), au moins deux jeux de paramètres différents sont utilisés pour le faisceau laser (2).

**10.** Procédé selon la revendication 8 et la revendication 9, **caractérisé en ce que** les différents jeux de paramètres se distinguent au moins par le diamètre de vobulation (d).

**11.** Procédé selon l'une des revendications précédentes, **caractérisé en ce que** le procédé est conduit sans gaz protecteur et/ou sans gaz de travail.

**12.** Procédé selon l'une des revendications précédentes, **caractérisé en ce que** le composant (1) métallique présente une épaisseur de tôle inférieure à 2 mm, en particulier inférieure à 1 mm.

**13.** Procédé selon l'une des revendications précédentes, **caractérisé en ce que** le composant métallique présente un revêtement (7).

**14.** Procédé selon l'une des revendications précédentes, **caractérisé en ce que** le procédé n'endommage pas le revêtement (7) et/ou la peinture (8, 9) dans la zone proche de la coupe.

**15.** Procédé selon l'une des revendications précédentes, **caractérisé en ce qu'**une ouverture (12) est découpée dans une carrosserie automobile (10, 24) peinte, en particulier peinte de façon définitive.

Fig. 1

Fig. 2

n = 5

n = 10

n = 15

n = 20

n = 25

n = 30

EP 1 920 873 B1

Fig. 3

Fig. 4

EP 1 920 873 B1

Fig. 5

Fig. 6

EP 1 920 873 B1

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0460338 A1
- DE 10133341 A1